# EUROPEAN PATENT SPECIFICATION

(11) **EP 3 288 828 B1**
(45) Date of publication and mention of the grant of the patent: **01.11.2023**
(21) Application number: 16719250.9
(22) Date of filing: 11.04.2016
(51) Int. Cl.: B64C 39/02, G05D 1/00

(54) **UNMANNED AERIAL VEHICLE SYSTEM AND METHOD FOR CONTROLLING AN UNMANNED AERIAL VEHICLE**
UNBEMANNTES LUFTFAHRZEUGSYSTEM UND VERFAHREN ZUR STEUERUNG EINES UNBEMANNTEN LUFTFAHRZEUGS
SYSTÈME DE VÉHICULE AÉRIEN SANS PILOTE ET SON PROCÉDÉ DE COMMANDE

(30) Priority: 27.04.2015 CH 5712015
(43) Date of publication of application: 07.03.2018
(73) Proprietor: Sensefly S.A., 1033 Cheseaux-sur-Lausanne (CH)
(72) Inventor: BEYELER, Antoine, 1007 Lausanne (CH); ZUFFEREY, Jean-Christophe, 1037 Etagnières (CH); HALTER, Andrea, 6402 Merlischachen (CH); KNÜSEL, Jérémie, 1018 Lausanne (CH)
(74) Representative: Lavoix
(86) International application number: PCT/EP2016/057938
(87) International publication number: WO 2016/173831

(56) References cited:
- EP-A2- 2 557 468
- EP-B1- 1 307 797
- DE-A1-102005 020 594
- US-A1- 2010 228 406

## Description

### Technical Field

The present invention relates to the field of unmanned aerial vehicles (UAVs), popularly known as "drones". More particularly, the invention relates to an unmanned aerial vehicle system and a method for controlling an unmanned aerial vehicle which permit highly intuitive control of a rotary wing unmanned aerial vehicle by a single operator.

### State of the art

In recent years, unmanned aerial vehicles of both the fixed wing and rotary wing types have become extremely useful for not only military, but also civilian applications. Such civilian applications include mapping, search and rescue, aerial photography (including cinematography, e.g. for sporting events) and inspection of structures. Depending on the task at hand, varying degrees of automation of the flight of the UAV can be used. At its most automated, a UAV can be pre-programmed and then fly a specific mission without further input from the operator, and at its least automated, one or more operators can fly the UAV in real-time.

In this latter role, it is usual that a camera is pivotally mounted on the UAV, and can be pivoted with respect to the UAV around one or more axes. This typically results in the operator or operators having to control the functions of the UAV according to two coordinate sets: the UAV must be flown according to an earth-based Cartesian coordinate set, whereas the camera must be steered according to a polar coordinate set in one or two dimensions, this coordinate set being referenced to the UAV. Since the coordinate set of the camera is dependent on that of the UAV, this requires a significant degree of spatial awareness, and can result in rather complex control systems.

In order to simplify control, various systems have been devised.

For instance, EP1307797 discloses a special control console comprising two joysticks and multiple screen displays. More intuitively, various "pilot's eye" systems have been developed. EP 2 557 468 describes a system in which a head-mounted display which enables the operator to see the images received from a stereoscopic camera mounted on the UAV. A motion sensor detects movement of the operator's head, and steers the direction of the optical axis of the camera accordingly. The operator is also provided with a joystick for controlling the motion of the UAV. Such a system requires specialist equipment, and still decouples the control of the movement of the camera from the control of the movement of the UAV.

DE 10 2005 020 594 proposes a simpler arrangement, wherein the camera is mounted on a rotary wing UAV such that it pivots only in the vertical plane. Turning the view of the camera left to right thus requires rotating the UAV about its vertical axis, thus coupling these movements together. However, the control of the angle of the camera is still decoupled from the motion of the UAV. Indeed, the controls for the movement of the UAV are quite fundamental, relating to roll, pitch, ascend/descend, and yaw, and the angle of camera with respect to the UAV is further controlled separately (see paragraph [0069] of this document).

Hence, to fly the UAV towards an object situated at a significant angle above or below the flight level of the UAV, the operator has to precisely control the ascent/descent, pitch, roll, yaw and the camera angle so as to create a flight path towards the target object. This requires significant dexterity and training, as well as a good knowledge of the fundamentals of flying a rotary wing UAV.

Similar limitations may be cited for the UAV described in the document US2010/0228406A1 in which an operator has to define and select velocity flight commands to achieve a desired flight path towards an identified target.

An object of the present invention is thus to overcome the above-mentioned drawbacks of the prior art, and thereby to permit a single operator to control a UAV in a simple, intuitive manner.

### Disclosure of the invention

The object of the invention is attained by an unmanned aerial vehicle system according to independent claim 1, and by a method of controlling an unmanned aerial vehicle according to independent claim 13, with preferred embodiments being defined in the dependent claims. In general, the unmanned aerial vehicle system comprises: a rotary wing unmanned aerial vehicle, i.e. a hovering UAV comprising one or more rotors, and a control device. The UAV comprises a body 3a provided with at least one video camera mounted thereupon, said video camera having an optical axis (either physical or virtual) which is pivotable around at least one pivot axis at a pivot angle with respect to said body 3a. The UAV is adapted to transmit images produced by the camera.

The control device is adapted to communicate bidirectionally (i.e. to send and receive signals, either wirelessly or through a wired connection) with the rotary wing unmanned aerial vehicle, the control device comprising a display for displaying images produced by said video camera and transmitted by the UAV, and comprises a manual control interface for inputting commands for controlling the movement of the rotary wing unmanned aerial vehicle. The control device is further adapted to instruct the rotary wing unmanned aerial vehicle to move and said optical axis to pivot based on said commands input by the operator.

According to the invention, the UAV system is configured such that said instructions are arranged, configured and adapted to control movement of the rotary wing unmanned aerial vehicle in a direction dependent on said optical axis irrespective of said pivot angle between said optical axis and said body.

It should be noted that "command", "instruct" etc. are used interchangeably in the specification, and serve simply to better distinguish commands inputted by the user from instructions transmitted by the control device to the UAV. Furthermore, the calculation of the exact motor parameters required to move the UAV as desired may be calculated either in the control device, or may be calculated by a processor on the UAV in response to "raw" instructions transmitted by the control device.

In consequence, the operator can fly the UAV entirely by pilot's eye view, all commands being directly related to the optical axis of the video camera. There is thus no need for him to reason spatially at a high level, or to control the pivoting of the camera and the flying of the UAV separately. Hence, to follow a path to approach a point situated out of the plane of the UAV, the operator merely "looks" at the point with the camera and inputs a single command to cause the UAV to approach that point, - he no longer has to control simultaneously a forwards and a downwards flightpath with great skill so as to keep the optical axis pointed where desired. When instructing the UAV to move laterally (up-down-left-right) with respect to that point as seen from the perspective of the camera, again, only a single command need be given. This permits highly intuitive control of the UAV, reducing the training burden and making the UAV significantly easier to operate. This leaves time for other tasks, for interpretation of information and images coming from the UAV, and so on.

In an embodiment, the control device is adapted to receive commands inputted to the manual control interface by an operator, to convert said inputted commands into movement commands for the rotary wing unmanned aerial vehicle and into pivoting commands for the pivot angle of the optical axis of the camera (whether physical or virtual) with respect to said body. In an alternative embodiment, control device is adapted to transmit commands inputted to the manual control interface by an operator to the rotary wing unmanned aerial vehicle, a processing unit situated in the rotary wing unmanned aerial vehicle being adapted to convert said inputted commands into movement commands for the rotary wing unmanned aerial vehicle and, in the case of a pivotable camera, also into pivoting commands for the pivot angle of the optical axis of the camera with respect to said body.

In an embodiment, the video camera is pivotably mounted on said body, and whereby said optical axis is pivoted by pivoting said video camera, i.e. pivoting a physical optical axis of the video camera.

Alternatively, the video camera is fixed with respect to the body and has a viewing angle of at least 120°. In this case, the control unit is adapted to display on the display unit a reduced angle of view with respect to said viewing angle (i.e. a portion of the total view such as a viewing angle of less than 90°, less than 80°, less than 60°, less than 40° or even, if zooming in is a possibility, down to a few degrees), the optical axis then being a virtual axis defined in reference to this reduced angle of view, e.g. defined by the midpoint thereof. This virtual axis is pivotable by means of changing the position of said reduced angle of view within the viewing angle of the video camera so as to view a different portion of the total view of the camera.

Advantageously, the control device is configured such that a command inputted by the operator to move the rotary wing unmanned aerial vehicle in a forwards direction or in a backwards direction instructs the rotary wing unmanned aerial vehicle to move parallel to the optical axis, and such that a command inputted by the operator to move the rotary wing unmanned aerial vehicle in at least one lateral direction instructs the rotary wing unmanned aerial vehicle to move perpendicular to said optical axis, i.e. a command in the left/right direction and/or in the up/down direction: it is possible for this condition to be true for either horizontal (left/right) or vertical (up/down) directions, or both. Hence, a command to fly "forwards" or "backwards" causes the point of view of the operator as displayed on the display unit to move along the optical axis of the camera. This produces a "zoom in / zoom out" effect on the image.

This perpendicular direction may be according to a Cartesian coordinate system, or according to an at least partially polar coordinate system with an origin at any convenient point, line or surface. These can be mixed and matched, e.g. with a Cartesian coordinate system for the up/down directions, and a polar coordinate system for the left-right directions or vice-versa. This gives many possibilities for e.g. Cartesian, spherical or cylindrical coordinate systems.

In the case of a polar coordinate system, the origin of said polar coordinate system may be situated on said optical axis in reference to an object situated on said optical axis. This reference can be the intersection of the optical axis with a surface of a structure, or a point closer to the UAV or within the structure, as determined by the operator.

Advantageously, the control device is adapted to permit the operator to select a surface of an object and to control the rotary wing unmanned aerial vehicle according to a coordinate system referenced to said surface. The motion of the UAV can thus be "anchored" to the surface, simplifying flying the UAV in proximity thereto. In essence, the commands given by the operator are thus referenced to the surface, reducing risk of collision and permitting easy inspection of simple or complex structures.

The control device may be configured so as to permit the operator to select said surface by means of the optical axis, and so as to maintain a specified angle between the surface and the optical axis while flying the rotary wing unmanned aerial vehicle according to said coordinate system referenced to said surface. This specified angle may be a predetermined angle, and/or the angle between the surface and the optical axis at the moment of selection. Simple selection of the surface and simple control of the UAV with respect thereto is thus possible.

The control device may be configured to instruct the rotary wing unmanned aerial vehicle to fly a predetermined pattern, and so as to automate e.g. inspection of structures, minimising operator intervention and reducing the risk of operator error.

The rotary wing unmanned aerial vehicle may further comprise at least one auxiliary camera covering at least one lateral or a rearward direction (i.e. an up, down, left, or right direction with respect to the body of the UAV), and wherein the control device is configured to display a video from said auxiliary camera when the rotary wing unmanned aerial vehicle moves in a direction covered by said auxiliary camera.

In general, the method for controlling an unmanned aerial vehicle comprises the steps of:
- providing an unmanned aerial vehicle system as defined above;
- receiving a command inputted to the manual control interface by an operator;
- converting said command into movement instructions for the rotary wing unmanned aerial vehicle and into pivoting instructions for controlling the pivot angle of the optical axis of the video camera with respect to the body 3a of the rotary wing unmanned aerial vehicle; and
- moving the rotary wing unmanned aerial vehicle in a direction dependent on said optical axis irrespective of said pivot angle.

As for the corresponding system, this method thus permits the operator to fly the UAV entirely pilot's eye view, all commands being directly related to the optical axis of the video camera. There is thus no need for him to reason spatially at a high level, or to control the pivoting of the camera and the flying of the UAV separately. Hence, to follow a path to approach a point situated out of the plane of the UAV, the operator merely needs to input a single command to cause the UAV to approach that point - he no longer has to control simultaneously a forwards and a downwards flightpath with great skill so as to keep the optical axis pointed where desired. When instructing the UAV to move laterally (up-down-left-right), again, only a single command need be given. This permits highly intuitive control of the UAV, reducing the training burden and making the UAV significantly easier to operate. Again, this frees up time for other tasks such as interpreting images and data coming from the UAV.

Further details of the method have corresponding advantages to the equivalent system details, and need not be repeated here.

### Brief description of the drawings

Further details of the invention will appear more clearly upon reading the following description in reference to the appended figures, which show:
Fig. 1: a schematic illustration of an unmanned aerial vehicle system according to the invention;
Fig. 2: a schematic illustration of a control unit for use with the system of the invention;
Fig. 3a & 3b: a schematic illustration of movement of the UAV along the optical axis of the camera;
Fig. 4a-c: a schematic illustration of left-right movement of the UAV perpendicular to the optical axis of the camera in both Cartesian and polar coordinate sets;
Fig. 5a-c: a schematic illustration of up-down movement of the UAV perpendicular to the optical axis of the camera in both Cartesian and polar coordinate sets;
Fig. 6: a schematic illustration of a polar coordinate system centered on the top of a cylindrical structure;
Fig. 7: a schematic illustration of a coordinate system defined in reference to the surface of a structure;
Fig. 8: a schematic illustration of an arrangement of auxiliary cameras and their interaction with the display unit; and
Fig. 9: a schematic illustration of the principle of pivoting a virtual optical axis in the case of a fixed wide-angle camera.

### Embodiments of the invention

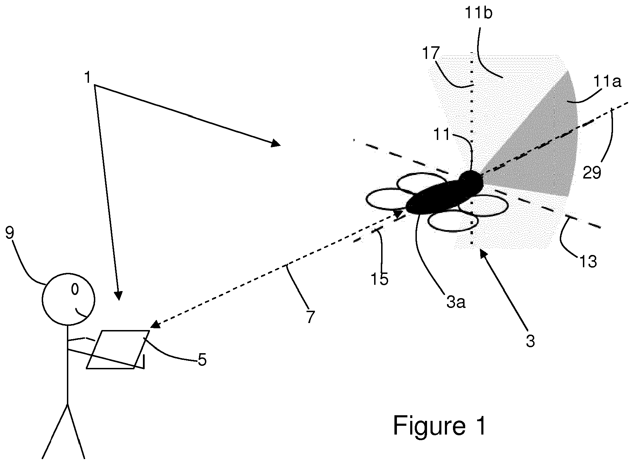

Figure 1 illustrates an unmanned aerial vehicle system 1 according to an embodiment of the invention, with further variants being mentioned in the text. This system comprises, as is usual, a rotary wing UAV 3, i.e. a UAV capable of hovering, and a control unit 5. The various types of such UAVs are well-known and need not be described further. The UAV 3 and the control unit 5 communicate with each other via a bidirectional communication link 7, schematically illustrated with a dashed arrow. Communication link 7 may either be wireless or via a wired connection (this latter being less common but nevertheless sometimes used in practice). Control unit 5 may be a dedicated unit, or may be a generic portable computer, tablet computer, smartphone or similar, which communicates with the UAV 3 either via a communication transponder integrated into the control unit 5 or which is provided as a plug-in accessory. Control unit 5 may comprise one or more parts, such as a laptop or tablet computer and optionally also a joypad, joystick, mouse, trackball or similar.

UAV 3 comprises a body 3a upon which is pivotally mounted a video camera 11, which in this example is pivotable around at least one axis 13, preferably perpendicular to the longitudinal axis 15 of the UAV 1 so as to pivot in the vertical plane of the UAV 3. As illustrated, video camera 11 is generally forward-looking, but any suitable direction is possible Pivoting around more axes is of course possible. This pivoting is controlled by an appropriate actuator (well-known and not illustrated). The camera can thus look up and down in the vertical plane. Optionally, the camera is pivotable also around the longitudinal axis 15 and/or the yaw axis for permitting the camera image to remain level and pointing where intended during lateral manoeuvres and for stability. It is also possible for the camera be pivotable around the vertical axis in addition, so that it can look left and right with respect to the orientation of the body 3a of the UAV 1. As illustrated, the optical axis 29 of the camera is oriented parallel to the longitudinal axis 15 of the UAV, its field of view 11a in the vertical plane being illustrated in dark grey, and the extent of the visible region 11b in the vertical plane taking into account the extent of the possible pivoting angles of camera 11 is illustrated in light grey. In practice, wider or narrower fields of view 11a and extents of the visible region 11b are also possible.

Alternatively, the video camera 11 may be fixed with respect to the body 3a and have a wide field of view, e.g. greater than 120°, greater than 150°, or even greater than 180°, the optical axis 29 being virtual and defined in reference to a view restricted with respect to the entire field of view of camera 11. This possibility is discussed in more detail below.

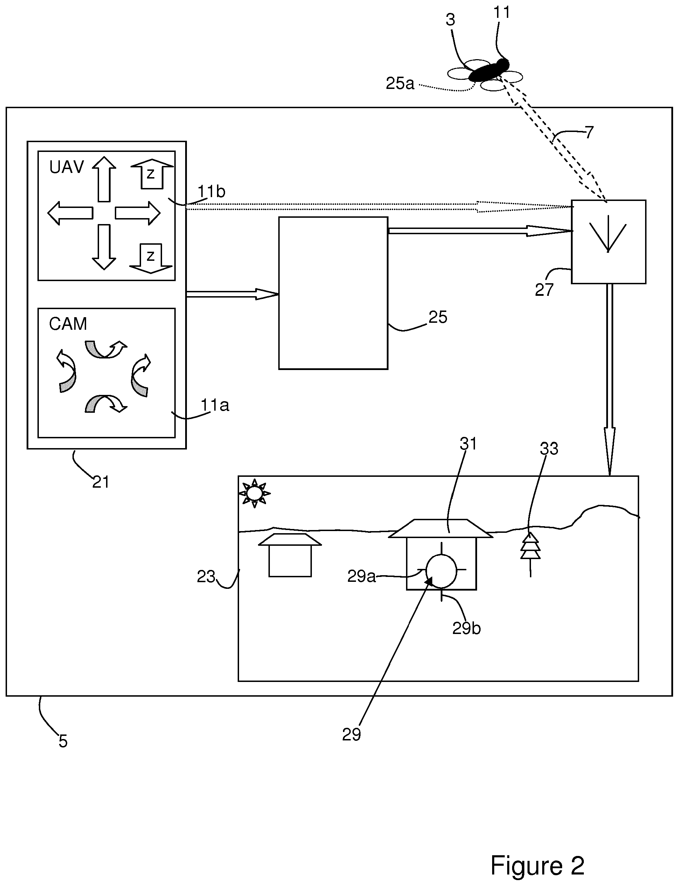

Figure 2 illustrates schematically a control unit 5 for use with the system 1 of the invention. Whereas it is known to control the movements of the UAV 3 directly, by piloting it via fundamental controls such as pitch, roll, yaw, motor power and so on, the control unit 5 of the invention provides a significantly more intuitive, natural control. In essence, the UAV 3 can be controlled by "looking" with the camera, and then motion commands/instructions for the UAV 3 are calculated and transmitted based on the direction of the optical axis. It is not excluded that the control unit 5 incorporates a so-called "expert" mode for control in which the operator 9 directly commands/instructs the fundamental movements of the UAV 3.

The control unit 5 comprises two fundamental functional blocks: an input unit 21, and a display unit 23. In the case that the display unit 23 is a touchscreen, the input unit may be provided as icons on the touchscreen, the two units thus being integrated with each other. Alternatively or additionally, any combination of touchscreens, keyboards, mouse, trackball, joystick, joypad, motion capture googles etc. may be used. Further possibilities in respect of integrating the input unit 21 with the display unit 23 will be described below. Alternatively, the display unit 23 and the input unit 21 may be two separate units communicating with each other via a wired or wireless link so as to constitute together the control unit 5. Input unit 21 sends signals corresponding to the inputs given by the operator 9 to a processor unit 25, which translates them into commands/instructions for the UAV 3 and for its camera 11, which are then transmitted to UAV 3 via communication transponder 27 and communication link 7, which communicates with a corresponding communication transponder situated in the UAV. Processor unit 25 may alternatively be situated inside UAV 3, in which case input unit 21 sends its output directly to the communication transponder 27, as illustrated by the dotted arrow linking these components and the dotted line connecting reference sign 25a in parentheses and the UAV 3. In such a case a processor unit 25a in the drone translates these commands/instructions for controlling the motion of the UAV 3.

Functionally, the input unit 21 is divided into two sub-units, camera input unit 21a, and motion control unit 21b.

In essence, the camera input unit 21a permits the operator 9 to "look" around and to change perspective by steering the image on the display unit 23. Advantageously, the optical axis 29 of the camera may be indicated on display unit 23 with a suitable icon, and may comprise a horizontal datum line 29a and a vertical datum line 29b. In the view of figure 2, the optical axis 29 is directed towards a lower portion of the large building 31.

Inputting commands to "pan left / pan right" will, from the operator's perspective cause the image to pan left / right, and inputting commands to camera to "pan up / pan down" will likewise cause the image to pan up / down by instructing the camera 11 to pivot. In the case of a camera 11 which is not pivotable about the vertical axis 17 of the UAV 3, "pan left / pan right" commands will be translated into movement instructions for the UAV 3 to yaw left / right, i.e. to pivot about a vertical axis, usually the vertical axis of the body 3a of the UAV 3 or a vertical axis transecting the camera 11. In the case in which the camera 11 is pivotable about the vertical axis, such commands may pivot the camera 11 with respect to the UAV about the vertical axis of rotation of the camera.

"Pan up / pan down" commands will cause the camera 11 to pivot about its axis of rotation so as to rotate the optical axis 29 of the camera in the vertical plane without moving the UAV 3.

Hence, the operator 9 can "look" around with the camera 11 in a very natural fashion.

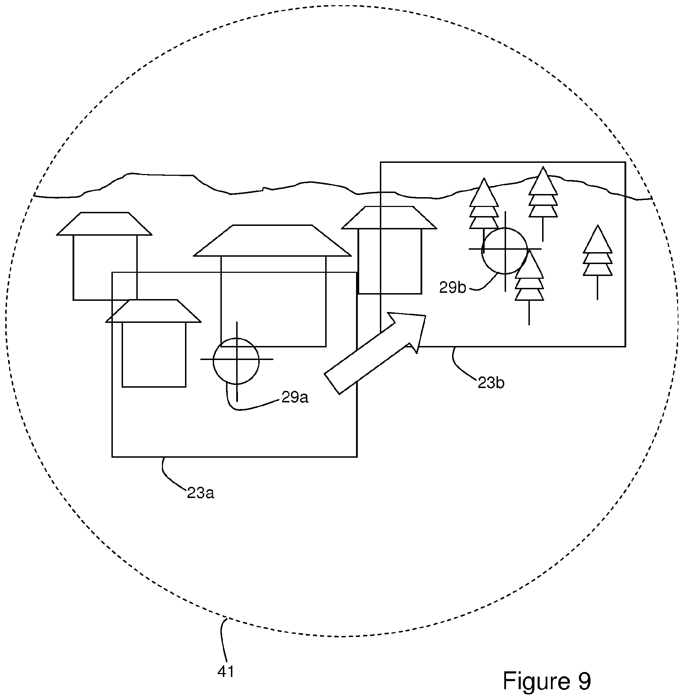

In the above-mentioned case of a fixed wide-angle video camera 11, the display unit 23 only displays a part of the whole view of the camera 11 (i.e. 120° or more, 160° or more, or 180° or more, depending on the capability of the camera lens), as can be seen in figure 9. This figure shows the whole view 41 of the camera 11, with two different views 23a, 23b as seen by the user on the display unit 23 superimposed thereupon. This view subtends an angle which is reduced with respect to the total viewing angle possible with the camera 11, such as between 40° and 90°. In fact, this angle can be selected as required (e.g. less than 90°, less than 80°, less than 60°, less than 40° or even down to just a few degrees), and may serve as a virtual "zoom" functionality, the narrower the view, the greater the zoom effect on the display unit 23. Furthermore, it should be noted that for situational awareness and navigational purposes, a much greater proportion of the camera's view can be used, such as 100°-120° (this latter naturally being most appropriate when the total view of the camera 11 is greater than 120°). The optical axis 29a, 29b in each case is a virtual optical axis and is defined with reference to the view 23a, 23b displayed on the display unit 23. Typically, this would be along the midpoint of the view 23a, 23b. Panning the view 23a to view 23b thus pivots the virtual optical axis 29a, 29b around a pair of virtual pivot axes centered on the focal point of the camera lens. Thus the virtual optical axis is pivotable with respect to the body 3a of the UAV 3. If the UAV 3 needs to manoeuvre to follow or to centralise the view 23a, 23b on the vertical axis of the camera 11, it can do so. Indeed, it may be advantageous to ensure that the virtual optical axis 29a, 29b is at all times in the central vertical plane containing the physical optical axis of the camera 11, left-right panning being carried out by yawing the UAV 3 (as in the case of a pivotable camera 11 which can only pivot in the vertical plane), and up-down panning being carried out by virtual pivoting of the virtual optical axis 29a, 29b. From the user's perspective, whether the camera 11 is conventional and its physical optical axis 29 is panned, or if camera 11 is fixed and the part of the view seen on the display unit 23 is panned in software, the effect is the same. In essence, the image is "steered" in exactly the same manner in both cases.

It should also be noted in this case that image stabilisation (i.e. correcting for pitch, yaw and rotation effects when manoeuvring the UAV) can be corrected in software, thereby presenting a stable image to the user which maintains its orientation during manoeuvring.

In order to translate the viewpoint, the UAV 3 is moved. The operator inputs motion commands on motion control unit 11b, corresponding to commands to move the UAV "forwards", "backwards", "left", "right" (these commands being represented on the figure by the four thin arrows), "up" and "down" (these two commands being represented by the thick arrows containing the indication "z"). "Left", "Right", "Up" and "Down" directions are, in the context of the present specification, considered to be lateral directions, "forwards" and "backwards" as being longitudinal directions.

Contrary to all known prior art indications, a "forwards" or a "backwards" command is translated by the processor 25/25a so as to instruct/command the UAV 3 to move parallel to the optical axis 29 of the camera 11, i.e. such that the optical axis 29 remains directed towards substantially the same point, irrespective of the angle between the optical axis 29 of the camera 11 and the body 3a of the UAV 3.

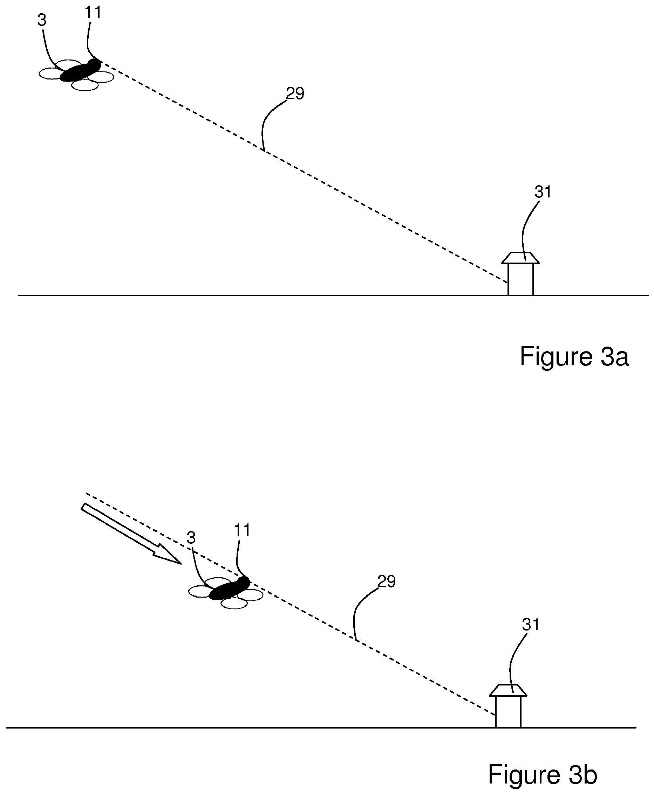

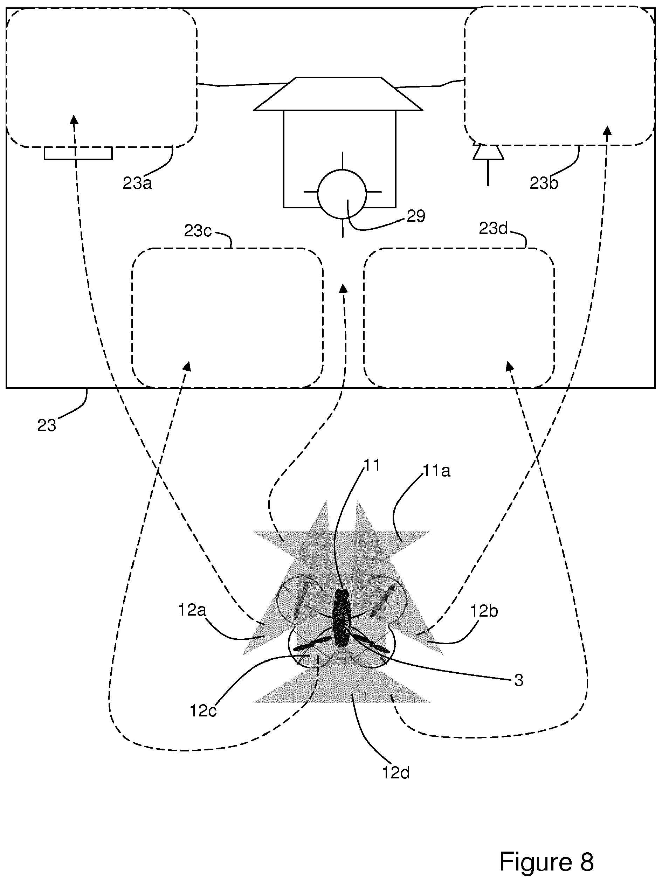

This is illustrated in figures 3a and 3b. Figure 3a illustrates, in vertical cross-section along the optical axis 29 of the camera 11, the situation shown on the display unit 23 on figure 2, i.e. the optical axis 29 is oriented towards a lower portion of the large building 31. At this point, the UAV 3 is stationary, and hovering. This principle as explained in figures 3a to figure 8 is the same irrespective of whether the camera 11 is fixed and the virtual optical axis is "moved" by viewing a restricted part of the whole view, or is physically pivotable with respect to the body 3a.

Figure 3b illustrates the situation a few seconds after the operator 9 gives and maintains a "forwards" command, e.g. by pressing on a corresponding button, corresponding icon on a touch screen, or similar. Processor 25/25a translates the "forwards" command into instructions for the UAV 3 such that optical axis 29 remains oriented towards substantially the same point on building 31, and the UAV 3 flies parallel to the optical axis 29. In essence, the camera 11 thus moves along its optical axis 29. If the operator stops giving the "forwards" command, the UAV 3 hovers.

If the operator then gives a "backwards" command for several seconds, the UAV 3 will retreat parallel to the optical axis 29 and can thus regain the position illustrated in figure 3a.

Contrary to prior art arrangements, the UAV 3 can thus be flown directly towards an object on the optical axis 29 of the camera 11 with a single command from the operator 9. There is thus no need for the operator to reason spatially so as to fly the UAV 3 along the optical axis. Conventionally, the operator 9 would have to command the UAV 3 to fly forwards and to descend, hence requiring skilled use of at least two control commands in the correct proportions, so as to follow the optical axis. With the system of the invention, only a single command is required, and the viewing angle is maintained.

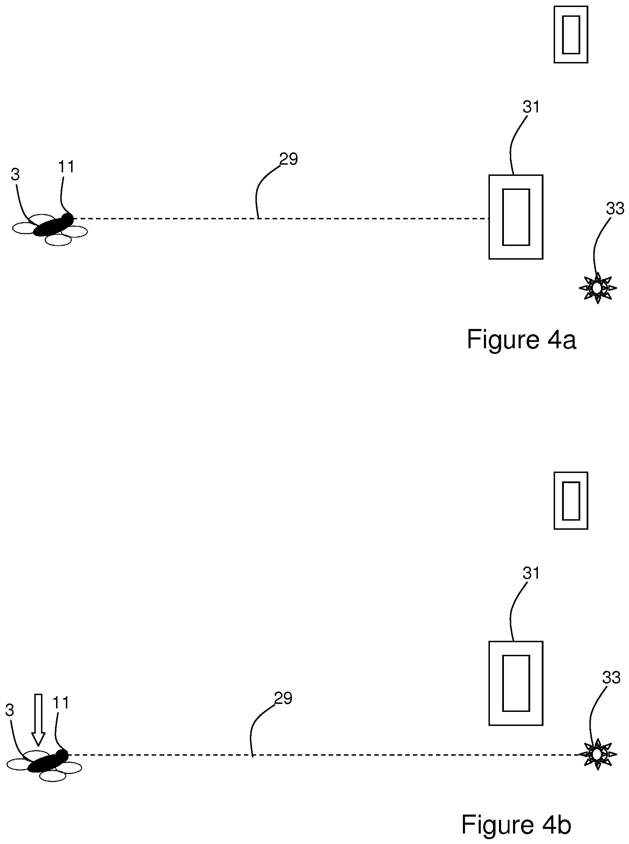

Figures 4a and 4b illustrate in plan view the situation when the operator 9 gives a command to move "right", in a Cartesian mode.

Figure 4a illustrates the situation shown on the display unit 23 on figure 2, i.e. the optical axis 29 is oriented towards a lower portion of the large building 31.

Let us say that the operator 9 wishes to view the trunk of the tree 33, which as can be seen on figure 2 is in the plane of the optical axis perpendicular to the vertical plane of movement of the camera 11. To the operator 9, the trunk of the tree 33 thus appears to the right of the optical axis 29, situated on the prolongation of the horizontal datum line 29a.

Hence, the operator gives the command to move "right", thereby moving the UAV 3 perpendicular to the optical axis 29 in the plane of the horizontal datum line 29a, i.e. in a direction perpendicular to both the optical axis 29 and to the vertical plane. The angle between the optical axis 29 and the ground remains constant. Once he is "looking" at the trunk of tree 33, as illustrated in figure 4b, the operator 9 stops giving the "right" command, and the UAV 3 stops moving and hovers.

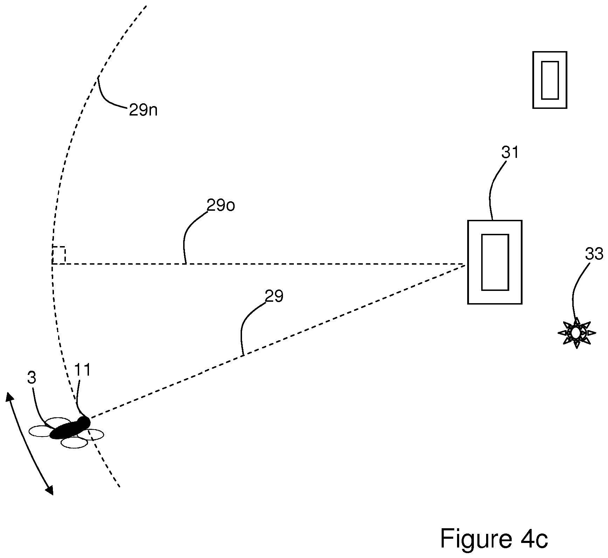

Figures 4c illustrates the same principle as illustrated in figure 4b, but in a polar mode, following a polar coordinate system.

Starting again from the situation illustrated in figure 4a, in a polar mode if the operator 9 gives a command to move "right", the UAV 3 will move perpendicular to the optical axis 29, following a surface of a sphere or a cylinder centered on an arbitrary point. In the illustrated case, this point is the intersection of the optical axis with the surface of the house 31, which can be determined by a rangefinder (e.g. laser, ultrasound, stereoscopic camera 11) or using simultaneous localisation and mapping (SLAM) techniques. The original optical axis 29o and the "real time" optical axis 29 have been illustrated in this figure, together with a normal line 29n in polar coordinates centred on the intersection of the optical axis 29 and the surface of building 31.

Alternatively, this point can be situated anywhere on the optical axis, even if not visible. E.g. if the position of the central vertical axis of building 31 is known, this point may be defined as being the intersection of the optical axis 29 and the central axis of building 31. It may also be any other arbitrarily-defined point. Such possibilities are useful for inspecting a point on a surface from various angles, e.g. to see more detail and optimise shadow effects, or to automatically inspect structures (see below).

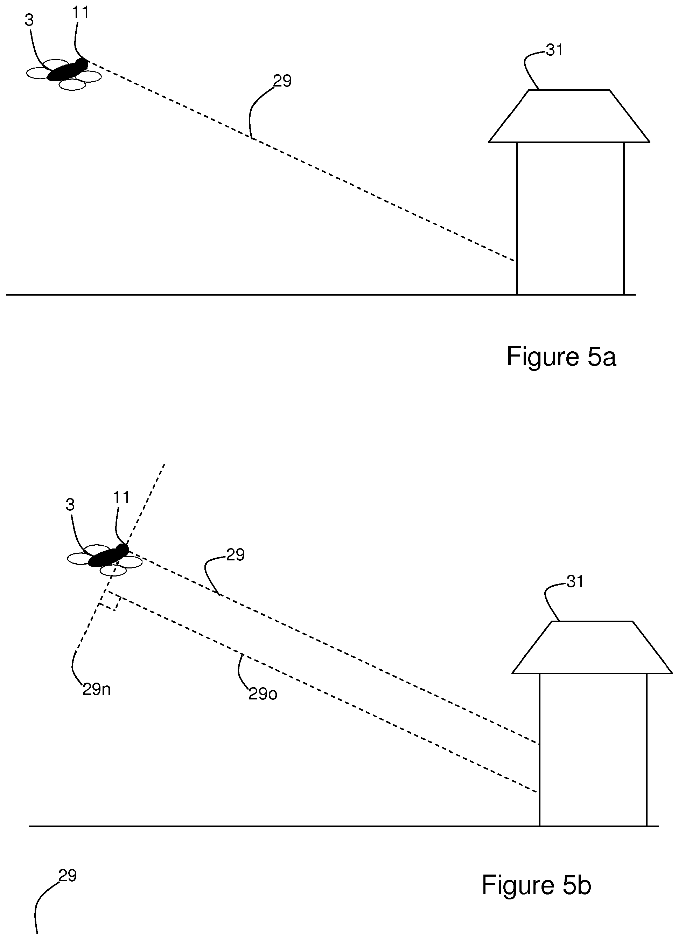

Figures 5a-c illustrate the same principle applied to commands in the "up" and "down" direction.

Figure 5a is a similar view to figure 3a, and need not be described in detail. If the operator 9 commands the UAV 3 to move "up", it again moves perpendicular to the optical axis, in the vertical plane. The original optical axis 29o and the current optical axis 29 remain thus parallel.

In the case of inspecting a vertical surface, this functionality may be undesirable since the UAV will not move parallel to the surface and thus will not retain a constant distance therefrom. In such a case, disabling the optical axis-referenced movements is possible, and thereby commanding "up" or "down" can simply move the UAV 3 vertically, as is conventional.

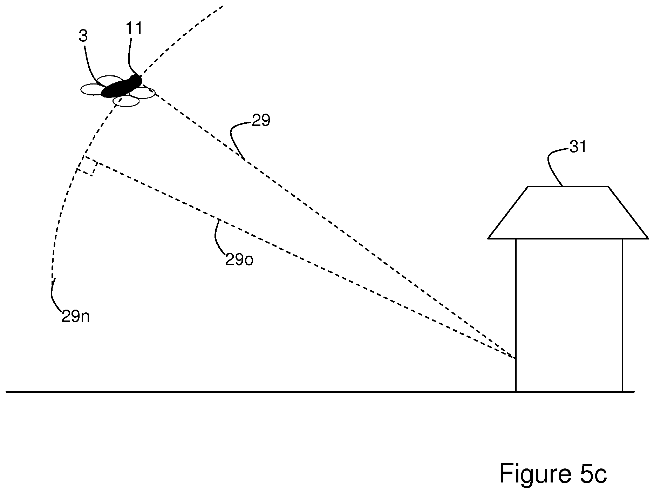

Figure 5c, in analogy to figure 4c, shows the same perpendicular movement of the UAV 3 with respect to the optical axis 29 in a polar coordinate set centred on the intersection of the original optical axis 29o and the surface of the building 31. All comments in respect of figure 4c apply equally to figure 5c mutatis mutandis, and need not be repeated.

It should be noted that it is not necessary for both "left / right" and "up / down" commands to be calculated according to the same type of coordinate set. It is entirely possible to apply e.g. a Cartesian coordinate set for "up / down" and a polar coordinate set for "left / right", or vice versa. In order to provide maximum flexibility, the control unit 5 may be provided with options for permitting the operator to select Cartesian / polar coordinate sets for left-right movement, and Cartesian / polar / true vertical for up-down movement. As a result, vertically or horizontally oriented cylindrical coordinate sets are possible.

It also goes without saying that the drone can be simultaneously given two or more non-conflicting, orthogonal directional commands at the same time, or to follow any oblique axis in the image reference frame in response to a single command.

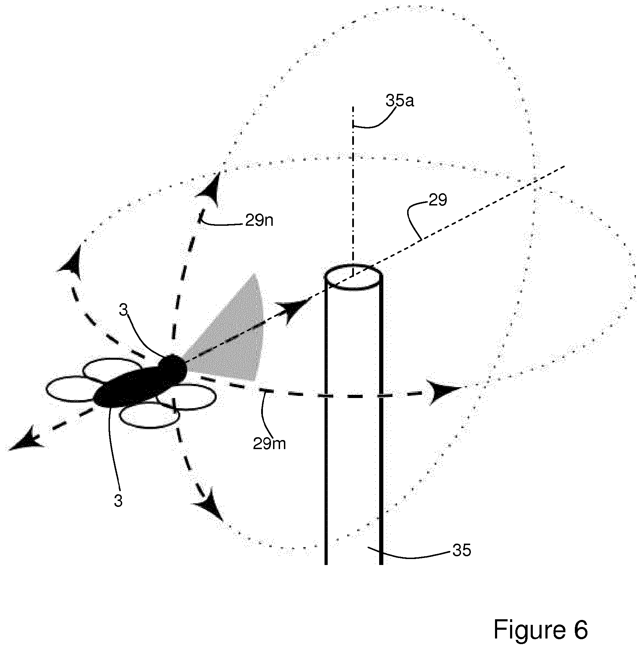

Figure 6 illustrates an isometric view illustrating more clearly this principle, in a double-polar coordinate set (i.e. polar for both up-down and left-right movements, hence a spherical coordinate set) for the inspection of the top of a tall structure 35 such as a post, pylon, water tower or similar. The same principle applies equally e.g. for a point of interest lying on a surface such as the ground, lying on a large roof or similar. This coordinate set is anchored on the vertical axis 35a at the point at which it passes through the upper surface of the structure 35. The operator may select this point by indicating this point on the display unit 23 by any convenient means, such as by aiming the optical axis 29 at the desired point and selecting it, e.g. by pressing a button or an icon with a mouse pointer, or by tapping it with a finger or stylus. A rangefinder (as mentioned above) may be used to determine the distance from the camera 11 and/or the UAV 3 to the point. It is also possible to select a point not on the optical axis, e.g. by clicking it with a mouse or selecting it by tapping a screen with a finger or stylus, the control unit 5 then automatically re-orienting the optical axis 29 to intersect the point, moving the UAV 3 according to the desired coordinate systems so as to do so. Furthermore it is also possible to manually input the coordinate of a point of interest, with respect to which the UAV will then orient itself.

Commanding movement "forwards" or "backwards" thus causes the UAV 3 to fly so that the camera 11 approaches this point or backs away from this point, thereby changing the radius of the spherical coordinate set, and commanding "left" or "right" causes the UAV 3 to orbit the point in the horizontal plane keeping the camera 11 trained thereon. Finally, commanding "up" or "down" causes the UAV to fly a circular path in the vertical plane, pivoting the camera 11 so as to again keep it trained on the point. If the apex of the circular path is reached, the UAV 3 can automatically re-orient itself if necessary to avoid control reversal, i.e. so that up and down commands still make sense to the operator 9.

It is also possible for the control unit 5 to be programmed to follow predetermined paths based on these coordinate sets, such as following a surface of a sphere, cone, cylinder while keeping the optical axis intersecting a desired point, or progressing this point along a predetermined locus. Such predetermined paths may also include scanning patterns in Cartesian or polar coordinate systems, designed automate inspection of structures and to optimise the filming results obtained by reducing operator error. For instance, a helical flightpath around a cylindrical structure with the optical axis 29 remaining at a constant angle to the axis of the structure 35a is a good example of such, or a back-and-forth scanning pattern on a wall or a roof of a building. Collision detection and avoidance schemes using proximity sensors and suitable detection and avoidance algorithms are also possible, as is adapting a predetermined path in response to collision risk.

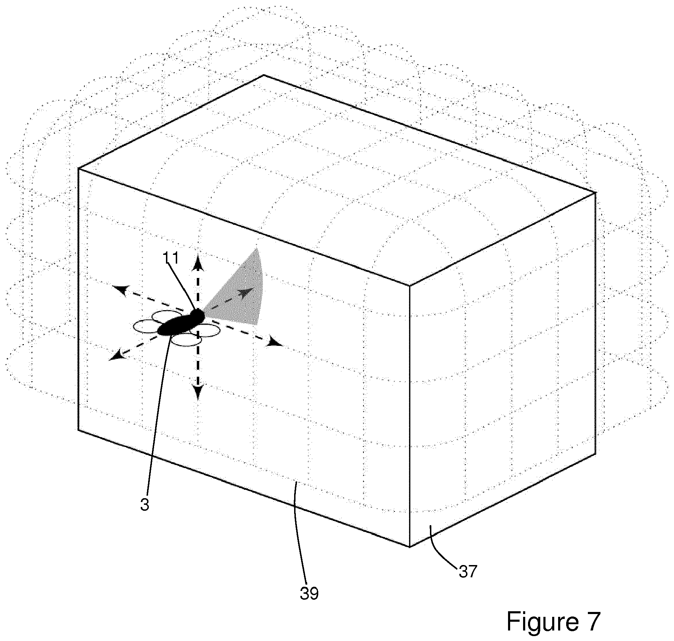

Figure 7 illustrates a further variant, in which the movement of the UAV 3 is controlled with reference to a coordinate system 39 defined in reference to an object such as a building 37. This coordinate system 39 is defined as being parallel to the surface of the building 37. Commanding the UAV 3 to move up, down, left or right moves the UAV 3 at a predetermined angle to the optical axis 29, which itself maintains a predetermined angle with respect to the surface of the building 27, e.g. by use of proximity/distance sensors, a stereoscopic camera, SLAM technique (see above) or similar. If the object to inspect is known in advance, e.g. on the basis of a 3D model, a map or similar, this predetermined angle may be preprogrammed. This predetermined angle with respect to the surface may be perpendicular to the surface (as illustrated), may be the angle present at the moment of selecting the surface to be followed, or may be any other predetermined angle (such as 30°, 45°...). Upon transitioning from e.g. a wall to a roof, or from one wall to an adjoining wall, the camera 11 and the UAV 3 are thus moved so as to maintain this predetermined angle. Commanding the UAV 3 to move forwards or backwards causes it to approach or withdraw from the surface along the optical axis 29, and thus change the distance of the coordinate set from the surface.

Again, automatic surface following algorithms may be used so as to ensure proper coverage, for instance moving the UAV 3 in a raster pattern.

In order to help improve the situational awareness of the operator and to help avoid collisions when manoeuvring the UAV 3 at an angle to the optical axis 29, UAV 3 may comprise a number auxiliary cameras, typically mounted in fixed positions on the body 3a of UAV 3, represented on the lower part of figure 7 by their fields of view 12a-12d. These auxiliary cameras cover areas typically not visible to the main camera 11. Auxiliary camera 12a covers generally the area to the left of the UAV 3 and as illustrated forwardly-biased, although this does not have to be the case. Likewise, auxiliary camera 12b covers the mirror image of the coverage of auxiliary camera 12a, on the right-hand side of the UAV 3. Auxiliary camera 12c covers the area immediately below UAV 3, whereas auxiliary camera 12d is oriented rearwards.

Advantageously, control unit 5 is configured such that, when the UAV 3 is manoeuvred in a direction at an angle to the optical axis 29, images from the corresponding auxiliary camera 12a-d are displayed on display unit 23 in a corresponding sub-window 23a-d which is displayed automatically when required by the movements commanded by the operator 9, and which disappear entirely when not needed. These sub-windows 23a-d may be positioned in an ergonomically-appropriate location on display unit 23. Alternatively, these sub-windows 23a-d may be constantly displayed, however this clutters the display, or displayed upon request (by pressing a button), either overlaid to the main camera view or next to it.

Furthermore, the UAV 3 may be provided with various proximity sensors, rangefinders and so on in convenient locations and acting in convenient directions. It is particularly advantageous when these sensors are paired with the various cameras 11, 12a-d and act in substantially the same directions as the corresponding camera 11, 12a-d. The output of these sensors can be displayed on the display unit 23, ideally in the corresponding sub-window 23a-d. In addition, a detection of a potential collision by a sensor may automatically cause the images from the corresponding camera 12a-d to be displayed on the display unit 23 in the corresponding sub-window 23a-d even if the UAV 3 is being moved parallel to the optical axis 29, so as to not only alert the operator 9 to a possible collision risk, but also to provide immediate and relevant visual information relating to this risk.

Although the invention has been described in reference to specific embodiments, these may be combined in ways that are not contradictory. Furthermore, other embodiments of the invention are possible without departing from the scope of the invention as defined in the appended claims.

## Claims

1. Unmanned aerial vehicle system (1) comprising:
- a rotary wing unmanned aerial vehicle (3) comprising a body (3a) provided with at least one video camera (11) mounted thereupon, said video camera (11) having an optical axis (29, 29a, 29b) pivotable around at least one pivot axis (13) at a pivot angle with respect to said body (3a), the rotary wing unmanned aerial vehicle (3) being adapted to transmit images produced by said video camera (11);
- a control device (5) adapted to communicate bidirectionally with the rotary wing unmanned aerial vehicle (3), the control device (5) comprising a display unit (23) for displaying images produced by said video camera (11) and a manual control interface (21) for inputting commands from an operator (9) for controlling the movement of the rotary wing unmanned aerial vehicle (3) and to instruct the rotary wing unmanned aerial vehicle (3) to move and said optical axis (29, 29a, 29b) to pivot based on said commands input by the operator (9);
wherein the unmanned aerial vehicle system (1) is configured such that said movement instructions are adapted to control movement of the rotary wing unmanned aerial vehicle (3) in a direction dependent on said optical axis (29, 29a, 29b) irrespective of said pivot angle between said optical axis (29, 29a, 29b) and said body (3a), and such that the unmanned aerial vehicle system (1) can be flown on the optical axis with a single command from an operator to said control device (5), **characterised by** said pivot command from the operator (9) being directly related to the optical axis of the video camera, and then movement instructions for the unmanned aerial vehicle being calculated and transmitted based on the direction of the optical axis.

2. Unmanned aerial vehicle system (1) according to claim 1, wherein said video camera (11) is pivotably mounted on said body (3a), and whereby said optical axis (29) is pivoted by pivoting said video camera (11).

3. Unmanned aerial vehicle system (1) according to claim 1, wherein said video camera (11) is fixed with respect to the body (3a) and has a viewing angle of at least 120°, and wherein the control unit (5) is adapted to display on the display unit (23) a reduced angle of view with respect to said viewing angle, said optical axis (29a, 29b) being a virtual optical axis defined in reference to said reduced angle of view and being pivotable by changing the position of said reduced angle of view within the viewing angle of the video camera (11).

4. Unmanned aerial vehicle system (1) according to any preceding claim, wherein the control device (5) is configured such that a command inputted by the operator (9) to move the rotary wing unmanned aerial vehicle (3) in a forwards direction or in a backwards direction instructs the rotary wing unmanned aerial vehicle (3) to move parallel to the optical axis (29, 29a, 29b), and such that a command inputted by the operator (9) to move the rotary wing unmanned aerial vehicle (3) in at least one lateral direction instructs the rotary wing unmanned aerial vehicle (3) to move perpendicular to said optical axis (29, 29a, 29b).

5. Unmanned aerial vehicle system (1) according to the preceding claim, wherein said perpendicular direction is according to a Cartesian coordinate system.

6. Unmanned aerial vehicle system (1) according to claim 4, wherein said perpendicular direction is according to an at least partially polar coordinate system.

7. Unmanned aerial vehicle system (1) according to the preceding claim, wherein an origin of said polar coordinate system is situated on said optical axis (29, 29a, 29b) in reference to an object situated on said optical axis (29, 29a, 29b).

8. Unmanned aerial vehicle system (1) according to any preceding claim, wherein the control device (5) is adapted to permit the operator (9) to select a surface of an object and to control the rotary wing unmanned aerial vehicle (3) according to a coordinate system referenced to said surface.

9. Unmanned aerial vehicle system (1) according to the preceding claim, wherein the control device (5) is configured so as to permit the operator (9) to select said surface by means of the optical axis (29, 29a, 29b), and so as to maintain a specified angle between the surface and the optical axis (29, 29a, 29b) while flying the rotary wing unmanned aerial vehicle (3) according to said coordinate system referenced to said surface.

10. Unmanned aerial vehicle system (1) according to the preceding claim, wherein the specified angle is one of the following:
- a predetermined angle;
- the angle between the surface and the optical axis (29, 29a, 29b) at the moment of selection.

11. Unmanned aerial vehicle system (1) according to one of claims 8 to 10, wherein the control device (5) is configured to instruct the rotary wing unmanned aerial vehicle (3) to fly a predetermined pattern.

12. Unmanned aerial vehicle system (1) according to one of claims 1 to 11, wherein the rotary wing unmanned aerial vehicle (3) comprises at least one auxiliary camera (11) covering at least one lateral, upward, downward or a rearward direction, and wherein the control device (5) is configured to display a video from said auxiliary camera (11) on the display unit (23) when the rotary wing unmanned aerial vehicle (3) moves in a direction covered by said auxiliary camera (11).

13. Method for controlling an unmanned aerial vehicle, comprising the steps of:
- providing an unmanned aerial vehicle system (1) according to any preceding claim;
- receiving a single command inputted to the manual control interface (21) by an operator (9) for controlling the movement of the rotary wing unmanned aerial vehicle (3); and
- instructing the rotary wing unmanned aerial vehicle (3) to move and said optical axis (29, 29a, 29b) to pivot based on said command input by the operator (9),
wherein said movement instructions are adapted to control movement of the rotary wing unmanned aerial vehicle (3) in a direction dependent on said optical axis (29, 29a, 29b) irrespective of said pivot angle between said optical axis (29, 29a, 29b) and said body (3a), and such that the unmanned aerial vehicle system (1) can be flown on the optical axis with said single command from the operator to said control device (5), **characterised by** said pivot command from the operator being directly related to the optical axis of the video camera, and then movement instructions for the unmanned aerial vehicle being calculated and transmitted based on the direction of the optical axis.

14. Method according to claim 13, wherein a command from the operator (9) to move forward moves the rotary wing unmanned aerial vehicle (3) parallel to the optical axis (29, 29a, 29b), and wherein a single command from the operator (9) to move laterally moves the rotary wing unmanned aerial vehicle (3) perpendicular to the optical axis (29, 29a, 29b).

15. Method according to the preceding claim, wherein said perpendicular direction is according to a Cartesian coordinate system.

16. Method according to claim 14, wherein said perpendicular direction is according to an at least partially polar coordinate system.

17. Method according to claim 16, wherein an origin of said coordinate system is determined in reference to an object situated on said optical axis (29, 29a, 29b).

18. Method according to one of claims 13-17, further comprising the operator (9) selecting a surface of an object and the control unit controlling the rotary wing unmanned aerial vehicle (3) according to a coordinate system referenced to said surface.

19. Method according to the preceding claim, wherein the operator (9) selects said surface by means of aiming the optical axis (29, 29a, 29b), and the rotary wing unmanned aerial vehicle (3) is flown while maintaining a substantially constant angle between the surface and the optical axis (29, 29a, 29b).

20. Method according to claim 19, wherein said substantially constant angle corresponding one of the following:
- a predetermined angle;
- the angle between the surface and the optical axis (29, 29a, 29b) at the moment of selection by the operator (9).

21. Method according to one of claims 18 to 20, wherein the control unit instructs the rotary wing unmanned aerial vehicle (3) to fly a predetermined pattern.

22. Method according to one of claims 13 to 21, wherein the rotary wing unmanned aerial vehicle (3) comprises a further camera (11) covering a lateral, upward, downward or a rearward direction, and wherein a video from said further camera (11) is displayed on the display unit (23) when the rotary wing unmanned aerial vehicle (3) moves in a direction covered by said further camera (11).

## Patentansprüche

1. Unbemanntes Luftfahrzeugsystem (1), umfassend:
- ein unbemanntes Drehflügel-Luftfahrzeug (3), umfassend einen Körper (3a), der mit mindestens einer daran montierten Videokamera (11) versehen ist, wobei die Videokamera (11) eine optische Achse (29, 29a, 29b) aufweist, die in einem Schwenkwinkel in Bezug auf den Körper (3a) um mindestens eine Schwenkachse (13) schwenkbar ist, wobei das unbemannte Drehflügel-Luftfahrzeug (3) dazu geeignet ist, Bilder zu übertragen, die von der Videokamera (11) erzeugt werden;
- eine Steuervorrichtung (5), die angepasst ist, um bidirektional mit dem unbemannten Drehflügel-Luftfahrzeug (3) zu kommunizieren, die Steuervorrichtung (5) umfassend eine Anzeigeeinheit (23) zum Anzeigen von Bildern, die durch die Videokamera (11) erzeugt werden, und eine manuelle Steuerschnittstelle (21) zum Eingeben von Befehlen von einem Bediener (9) zum Steuern der Bewegung des unbemannten Drehflügel-Luftfahrzeugs (3) und um das unbemannte Drehflügel-Luftfahrzeugs (3) anzuweisen, sich zu bewegen, und die optische Achse (29, 29a, 29b), um basierend auf den durch den Bediener (9) eingegebenen Befehlen zu schwenken;
wobei das unbemannte Luftfahrzeugsystem (1) so konfiguriert ist, sodass die Bewegungsanweisungen angepasst sind, um eine Bewegung des unbemannten Drehflügel-Luftfahrzeugs (3) unabhängig von dem Schwenkwinkel zwischen der optischen Achse (29, 29a, 29b) und dem Körper (3a) in eine Richtung zu steuern, die von der optischen Achse (29, 29a, 29b) abhängt, und derart, dass das unbemannte Luftfahrzeugsystem (1) mit einem einzigen Befehl von einem Bediener an die Steuervorrichtung (5) auf der optischen Achse geflogen werden kann, **dadurch gekennzeichnet, dass** der Schwenkbefehl von dem Bediener direkt auf die optische Achse der Videokamera bezogen ist, und wobei dann Bewegungsanweisungen für das unbemannte Luftfahrzeug basierend auf der Richtung der optischen Achse berechnet und übertragen werden.

2. Unbemanntes Luftfahrzeugsystem (1) nach Anspruch 1, wobei die Videokamera (11) schwenkbar an dem Körper (3a) montiert ist, und wobei die optische Achse (29) durch Schwenken der Videokamera (11) geschwenkt wird.

3. Unbemanntes Luftfahrzeugsystem (1) nach Anspruch 1, wobei die Videokamera (11) in Bezug auf den Körper (3a) fixiert ist und einen Blickwinkel von mindestens 120° aufweist, und wobei die Steuereinheit (5) angepasst ist, um an der Anzeigeeinheit (23) einen reduzierten Blickwinkel in Bezug auf den Blickwinkel anzuzeigen, wobei die optische Achse (29a, 29b) eine virtuelle optische Achse ist, die in Bezug auf den reduzierten Blickwinkel definiert ist und durch Ändern der Position des reduzierten Blickwinkels innerhalb des Blickwinkels der Videokamera (11) schwenkbar ist.

4. Unbemanntes Luftfahrzeugsystem (1) nach einem der vorherigen Ansprüche, wobei die Steuervorrichtung (5) konfiguriert ist, sodass ein Befehl, der von dem Bediener (9) eingegeben wird, um das unbemannte Drehflügel-Luftfahrzeug (3) in eine Vorwärtsrichtung oder in eine Rückwärtsrichtung zu bewegen, das unbemannte Drehflügel-Luftfahrzeug (3) anweist, sich parallel zu der optischen Achse (29, 29a, 29b) zu bewegen, und sodass ein Befehl, der von dem Bediener (9) eingegeben wird, um das unbemannte Drehflügel-Luftfahrzeug (3) in mindestens eine seitliche Richtung zu bewegen, das unbemannte Drehflügel-Luftfahrzeug (3) anweist, sich senkrecht zu der optischen Achse (29, 29a, 29b) zu bewegen.

5. Unbemanntes Luftfahrzeugsystem (1) nach dem vorherigen Anspruch, wobei die senkrechte Richtung gemäß einem kartesischen Koordinatensystem ist.

6. Unbemanntes Luftfahrzeugsystem (1) nach Anspruch 4, wobei die senkrechte Richtung gemäß einem zumindest teilweise polaren Koordinatensystem ist.

7. Unbemanntes Luftfahrzeugsystem (1) nach dem vorherigen Anspruch, wobei ein Ursprung des polaren Koordinatensystems auf der optischen Achse (29, 29a, 29b) in Bezug auf ein Objekt ist, das sich auf der optischen Achse (29, 29a, 29b) befindet.

8. Unbemanntes Luftfahrzeugsystem (1) nach einem der vorherigen Ansprüche, wobei die Steuervorrichtung (5) angepasst ist, um dem Bediener (9) zu ermöglichen, eine Oberfläche eines Objekts auszuwählen und das unbemannte Drehflügel-Luftfahrzeug (3) gemäß einem Koordinatensystem zu steuern, das auf diese Oberfläche referenziert ist.

9. Unbemanntes Luftfahrzeugsystem (1) nach dem vorherigen Anspruch, wobei die Steuervorrichtung (5) angepasst ist, um dem Bediener (9) zu ermöglichen, die Oberfläche mittels der optischen Achse (29, 29a, 29b) auszuwählen und einen spezifizierten Winkel zwischen der Oberfläche und der optischen Achse (29, 29a, 29b) beizubehalten, während das unbemannte Drehflügel-Luftfahrzeug (3) gemäß dem Koordinatensystem fliegt, das auf die Oberfläche referenziert ist.

10. Unbemanntes Luftfahrzeugsystem (1) nach dem vorherigen Anspruch, wobei der spezifizierte Winkel einer der folgenden ist:
- einem vorbestimmten Winkel;
- dem Winkel zwischen der Oberfläche und der optischen Achse (29, 29a, 29b) zum Zeitpunkt der Auswahl.

11. Unbemanntes Luftfahrzeugsystem (1) nach einem der Ansprüche 8 bis 10, wobei die Steuervorrichtung (5) konfiguriert ist, um das unbemannte Drehflügel-Luftfahrzeug (3) anzuweisen, ein vorbestimmtes Muster zu fliegen.

12. Unbemanntes Luftfahrzeugsystem (1) nach einem der Ansprüche 1 bis 11, wobei das unbemannte Drehflügel-Luftfahrzeug (3) mindestens eine Hilfskamera (11) umfasst, die mindestens eine seitliche, aufwärtsgerichtete, abwärtsgerichtete oder rückwärtige Richtung abdeckt, und wobei die Steuervorrichtung (5) konfiguriert ist, um ein Video von der Hilfskamera (11) auf der Anzeigeeinheit (23) anzuzeigen, wenn sich das unbemannte Drehflügel-Luftfahrzeug (3) in eine Richtung bewegt, die von der Hilfskamera (11) abgedeckt wird.

13. Verfahren zum Steuern eines unbemannten Luftfahrzeugs, umfassend die folgenden Schritte:
- Bereitstellen eines unbemannten Luftfahrzeugsystems (1) nach einem der vorherigen Ansprüche;
- Empfangen eines einzelnen Befehls, der von einem Bediener (9) in die manuelle Steuerschnittstelle (21) eingegeben wird, um die Bewegung des unbemannten Drehflügel-Luftfahrzeugs (3) zu steuern; und
- Anweisen des unbemannten Drehflügel-Luftfahrzeugs (3), sich zu bewegen, und der optischen Achse (29, 29a, 29b) zu schwenken, basierend auf dem Befehl, der von dem Bediener (9) eingegeben wird,
wobei die Bewegungsanweisungen angepasst sind, um eine Bewegung des unbemannten Drehflügel-Luftfahrzeugs (3) unabhängig von dem Schwenkwinkel zwischen der optischen Achse (29, 29a, 29b) und dem Körper (3a) in eine Richtung zu steuern, die von der optischen Achse (29, 29a, 29b) abhängt, und derart, dass das unbemannte Luftfahrzeugsystem (1) mit dem einzigen Befehl von dem Bediener an die Steuervorrichtung (5) auf der optischen Achse geflogen werden kann, **dadurch gekennzeichnet, dass** der Schwenkbefehl von dem Bediener direkt auf die optische Achse der Videokamera bezogen ist, und wobei dann Bewegungsanweisungen für das unbemannte Luftfahrzeug basierend auf der Richtung der optischen Achse berechnet und übertragen werden.

14. Verfahren nach Anspruch 13, wobei ein Befehl des Bedieners (9), sich vorwärts zu bewegen, das unbemannte Drehflügel-Luftfahrzeug (3) parallel zu der optischen Achse (29, 29a, 29b) bewegt, und wobei ein einziger Befehl des Bedieners (9), sich seitlich zu bewegen, das unbemannte Drehflügel-Luftfahrzeug (3) senkrecht zu der optischen Achse (29, 29a, 29b) bewegt.

15. Verfahren nach dem vorherigen Anspruch, wobei die senkrechte Richtung gemäß einem kartesischen Koordinatensystem ist.

16. Verfahren nach Anspruch 14, wobei die senkrechte Richtung gemäß einem zumindest teilweise polaren Koordinatensystem ist.

17. Verfahren nach Anspruch 16, wobei ein Ursprung des Koordinatensystems unter Bezugnahme auf ein Objekt bestimmt wird, das sich auf der optischen Achse (29, 29a, 29b) befindet.

18. Verfahren nach einem der Ansprüche 13 bis 17, wobei der Bediener (9) eine Oberfläche eines Objekts auswählt und die Steuereinheit das unbemannte Drehflügel-Luftfahrzeug (3) gemäß einem Koordinatensystem steuert, das auf diese Oberfläche referenziert ist.

19. Verfahren nach dem vorherigen Anspruch, wobei der Bediener (9) die Fläche durch Ausrichten der optischen Achse (29, 29a, 29b) auswählt und das unbemannte Drehflügel-Luftfahrzeug (3) unter Beibehaltung eines im Wesentlichen konstanten Winkels zwischen der Oberfläche und der optischen Achse (29, 29a, 29b) geflogen wird.

20. Verfahren nach Anspruch 19, wobei der im Wesentlichen konstante Winkel einem der folgenden entspricht:
- einem vorbestimmten Winkel;
- dem Winkel zwischen der Oberfläche und der optischen Achse (29, 29a, 29b) zum Zeitpunkt der Auswahl durch den Bediener (9).

21. Verfahren nach einem der Ansprüche 18 bis 20, wobei die Steuereinheit das unbemannte Drehflügel-Luftfahrzeug (3) anweist, ein vorbestimmtes Muster zu fliegen.

22. Verfahren nach einem der Ansprüche 13 bis 21, wobei das unbemannte Drehflügel-Luftfahrzeug (3) eine weitere Kamera (11) umfasst, die eine seitliche, aufwärtsgerichtete, abwärtsgerichtete oder rückwärtige Richtung abdeckt, und wobei ein Video von der weiteren Kamera (11) auf der Anzeigeeinheit (23) angezeigt wird, wenn sich das unbemannte Drehflügel-Luftfahrzeug (3) in eine Richtung bewegt, die von der weiteren Kamera (11) abgedeckt wird.

## Revendications

1. Système de véhicule aérien sans pilote (1) comprenant :
- un véhicule aérien sans pilote à voilure tournante (3) comprenant un corps (3a) équipé d'au moins une caméra vidéo (11) montée sur celui-ci, ladite caméra vidéo (11) présentant un axe optique (29, 29a, 29b) pivotant autour d'au moins un axe de pivotement (13) à un angle de pivotement par rapport audit corps (3a), le véhicule aérien sans pilote à voilure tournante (3) étant adapté pour transmettre des images produites par ladite caméra vidéo (11) ;
- un dispositif de commande (5) adapté pour communiquer de manière bidirectionnelle avec le véhicule aérien sans pilote à voilure tournante (3), le dispositif de commande (5) comprenant une unité d'affichage (23) pour afficher des images produites par ladite caméra vidéo (11) et une interface de commande manuelle (21) pour saisir les commandes d'un opérateur (9) afin de contrôler le mouvement du véhicule aérien sans pilote à voilure tournante (3) et pour ordonner au véhicule aérien sans pilote à voilure tournante (3) de se déplacer et audit axe optique (29, 29a, 29b) de pivoter sur la base desdites commandes saisies par l'opérateur (9) ;
dans lequel le système de véhicule aérien sans pilote (1) est configuré de telle sorte que lesdites instructions de mouvement sont adaptées pour commander le mouvement du véhicule aérien sans pilote à voilure tournante (3) dans une direction dépendant dudit axe optique (29, 29a, 29b) indépendamment dudit angle de pivotement entre ledit axe optique (29, 29a, 29b) et ledit corps (3a), et tel que le système de véhicule aérien sans pilote (1) peut être piloté sur l'axe optique avec une seule commande d'un opérateur audit dispositif de commande (5), **caractérisé en ce que** ladite commande de pivot de l'opérateur est directement liée à l'axe optique de la caméra vidéo, et ensuite les instructions de mouvement pour le véhicule aérien sans pilote sont calculées et transmises sur la base de la direction de l'axe optique.

2. Système de véhicule aérien sans pilote (1) selon la revendication 1, dans lequel ladite caméra vidéo (11) est montée en pivotement sur ledit corps (3a), et dans lequel ledit axe optique (29) est mis en pivotement par le pivotement de ladite caméra vidéo (11).

3. Système de véhicule aérien sans pilote (1) selon la revendication 1, dans lequel ladite caméra vidéo (11) est fixe par rapport au corps (3a) et présente un angle de vue d'au moins 120°, et dans lequel l'unité de commande (5) est adaptée pour afficher sur l'unité d'affichage (23) un angle de vue réduit par rapport audit angle de vue, ledit axe optique (29a, 29b) étant un axe optique virtuel défini en référence audit angle de vue réduit et pouvant pivoter en changeant la position dudit angle de vue réduit dans l'angle de vue de la caméra vidéo (11).

4. Système de véhicule aérien sans pilote (1) selon l'une quelconque des revendications précédentes, dans lequel le dispositif de commande (5) est configuré de telle sorte qu'une commande introduite par l'opérateur (9) pour déplacer le véhicule aérien sans pilote à voilure tournante (3) dans une direction avant ou dans une direction arrière demande au véhicule aérien sans pilote à voilure tournante (3) de se déplacer parallèlement à l'axe optique (29, 29a, 29b), et de telle sorte qu'une commande introduite par l'opérateur (9) pour déplacer le véhicule aérien sans pilote à voilure tournante (3) dans au moins une direction latérale ordonne au véhicule aérien sans pilote à voilure tournante (3) de se déplacer perpendiculairement audit axe optique (29, 29a, 29b).

5. Système de véhicule aérien sans pilote (1) selon la revendication précédente, dans lequel ladite direction perpendiculaire est conforme à un système de coordonnées cartésiennes.

6. Système de véhicule aérien sans pilote (1) selon la revendication 4, dans lequel ladite direction perpendiculaire est conforme à un système de coordonnées au moins partiellement polaire.

7. Système de véhicule aérien sans pilote (1) selon la revendication précédente, dans lequel une origine dudit système de coordonnées polaires est située sur ledit axe optique (29, 29a, 29b) en référence à un objet situé sur ledit axe optique (29, 29a, 29b).

8. Système de véhicule aérien sans pilote (1) selon l'une quelconque des revendications précédentes, dans lequel le dispositif de commande (5) est adapté pour permettre à l'opérateur (9) de sélectionner une surface d'un objet et de commander le véhicule aérien sans pilote à voilure tournante (3) en fonction d'un système de coordonnées référencé à ladite surface.

9. Système de véhicule aérien sans pilote (1) selon la revendication précédente, dans lequel le dispositif de commande (5) est configuré de manière à permettre à l'opérateur (9) de sélectionner ladite surface au moyen de l'axe optique (29, 29a, 29b), et de manière à maintenir un angle spécifié entre la surface et l'axe optique (29, 29a, 29b) tout en pilotant le véhicule aérien sans pilote à voilure tournante (3) selon ledit système de coordonnées référencé par rapport à ladite surface.

10. Système de véhicule aérien sans pilote (1) selon la revendication précédente, dans lequel l'angle spécifié est l'un des suivants :
- un angle prédéterminé ;
- l'angle entre la surface et l'axe optique (29, 29a, 29b) au moment de la sélection.

11. Système de véhicule aérien sans pilote (1) selon l'une des revendications 8 à 10, dans lequel le dispositif de commande (5) est configuré pour ordonner au véhicule aérien sans pilote à voilure tournante (3) de voler selon un schéma prédéterminé.

12. Système de véhicule aérien sans pilote (1) selon l'une des revendications 1 à 11, dans lequel le véhicule aérien sans pilote à voilure tournante (3) comprend au moins une caméra auxiliaire (11) couvrant au moins une direction latérale, vers le haut, vers le bas ou vers l'arrière, et dans lequel le dispositif de commande (5) est configuré pour afficher une vidéo provenant de ladite caméra auxiliaire (11) sur l'unité d'affichage (23) lorsque le véhicule aérien sans pilote à voilure tournante (3) se déplace dans une direction couverte par ladite caméra auxiliaire (11).

13. Procédé de commande d'un véhicule aérien sans pilote, comprenant les étapes suivantes :
- la fourniture d'un système de véhicule aérien sans pilote (1) selon l'une quelconque des revendications précédentes ;
- la réception d'une commande unique introduite dans l'interface de commande manuelle (21) par un opérateur (9) pour commander le mouvement du véhicule aérien sans pilote à voilure tournante (3) ; et
- l'ordre au véhicule aérien sans pilote à voilure tournante (3) de se déplacer et à l'axe optique (29, 29a, 29b) de pivoter sur la base de la commande saisie par l'opérateur (9),
dans lequel lesdites instructions de mouvement sont adaptées pour commander le mouvement du véhicule aérien sans pilote à voilure tournante (3) dans une direction dépendant dudit axe optique (29, 29a, 29b) indépendamment dudit angle de pivotement entre ledit axe optique (29, 29a, 29b) et ledit corps (3a), et tel que le système de véhicule aérien sans pilote (1) peut être piloté sur l'axe optique avec ladite commande unique de l'opérateur audit dispositif de commande (5), **caractérisé en ce que** ladite commande de pivot de l'opérateur est directement liée à l'axe optique de la caméra vidéo, et ensuite les instructions de mouvement pour le véhicule aérien sans pilote sont calculées et transmises sur la base de la direction de l'axe optique.

14. Procédé selon la revendication 13, dans lequel une commande de l'opérateur (9) pour avancer déplace le véhicule aérien sans pilote à voilure tournante (3) parallèlement à l'axe optique (29, 29a, 29b), et dans lequel une seule commande de l'opérateur (9) pour se déplacer latéralement déplace le véhicule aérien sans pilote à voilure tournante (3) perpendiculairement à l'axe optique (29, 29a, 29b).

15. Procédé selon la revendication précédente, dans lequel ladite direction perpendiculaire est conforme à un système de coordonnées cartésiennes.

16. Procédé selon la revendication 14, dans lequel ladite direction perpendiculaire est conforme à un système de coordonnées au moins partiellement polaires.

17. Procédé selon la revendication 16, dans lequel une origine dudit système de coordonnées est déterminée en référence à un objet situé sur ledit axe optique (29, 29a, 29b).

18. Procédé selon l'une des revendications 13 à 17, comprenant en outre la sélection par l'opérateur (9) d'une surface d'un objet et la commande par l'unité de contrôle du véhicule aérien sans pilote à voilure tournante (3) en fonction d'un système de coordonnées référencé par rapport à cette surface.

19. Procédé selon la revendication précédente, dans lequel l'opérateur (9) sélectionne ladite surface en orientant l'axe optique (29, 29a, 29b), et le véhicule aérien sans pilote à voilure tournante (3) est piloté en maintenant un angle sensiblement constant entre la surface et l'axe optique (29, 29a, 29b).

20. Procédé selon la revendication 19, dans lequel ledit angle sensiblement constant correspond à l'un des éléments suivants :
- un angle prédéterminé ;
- l'angle entre la surface et l'axe optique (29, 29a, 29b) au moment de la sélection par l'opérateur (9).

21. Procédé selon l'une des revendications 18 à 20, dans lequel l'unité de commande ordonne au véhicule aérien sans pilote à voilure tournante (3) de voler selon un schéma prédéterminé.

22. Procédé selon l'une des revendications 13 à 21, dans lequel le véhicule aérien sans pilote à voilure tournante (3) comprend une autre caméra (11) couvrant une direction latérale, vers le haut, vers le bas ou vers l'arrière, et dans lequel une vidéo provenant de cette autre caméra (11) est affichée sur l'unité d'affichage (23) lorsque le véhicule aérien sans pilote à voilure tournante (3) se déplace dans une direction couverte par cette autre caméra (11).
